# EUROPEAN PATENT SPECIFICATION

(11) **EP 2 746 329 B1**
(45) Date of publication and mention of the grant of the patent: **02.12.2015**
(21) Application number: 13199351.1
(22) Date of filing: 23.12.2013
(51) Int. Cl.: C08K 13/02

(54) **THERMOSETTING AQUEOUS RESIN COMPOSITION AND USE THEREOF AS BINDER FOR MINERAL WOOL**
WÄRMEHÄRTBARE WÄSSRIGE HARZZUSAMMENSETZUNG UND VERWENDUNG DAVON ALS BINDEMITTEL FÜR MINERALWOLLE
COMPOSITION AQUEUSE DE RÉSINE THERMODURCISSABLE ET SON UTILISATION COMME LIANT POUR LAINE MINÉRALE

(30) Priority: 21.12.2012 DE 102012224285
(43) Date of publication of application: 25.06.2014
(73) Proprietor: Saint-Gobain Isover, 92400 Courbevoie (FR)
(72) Inventor: Hünig, Hagen, 69221 Dossenheim (DE); Strätker, Monika, 68305 Mannheim (DE)
(74) Representative: Winter, Brandl, Fürniss, Hübner, Röss, Kaiser, Polte - Partnerschaft mbB

(56) References cited:
- WO-A1-2007/060236
- US-A- 6 071 994

## Description

The present invention relates to thermosetting aqueous resin compositions according to claim 1, the use of a resin composition according to claim 8 and claim 9, a binder for mineral wool according to claim 10, and a mineral wool product bound therewith according to claim 11.

The use of flame retardants in plastics of daily use of all kinds for a long time has been a common method in order to adapt a respective system to the requirements of a specific fire protection classification. Several ways to proceed have proved to be successful. Flame retardants of polymer materials thereby are based on two basic principles and/or a combination thereof. Thus, halogenated compounds are added to common materials, such as polystyrene or polyurethane, which compounds, during heating, are subject to decomposing into halogen or halogenous hydrogen, thereby displacing the oxygen from the system. In addition, a carbon layer is formed that additionally shields the plastic from oxygen. What is a disadvantage in the method is that only a specific percentage of those additives may be used so as to influence the properties of the plastic not too much. Furthermore, numerous of those typically very stable compounds are suspected of accumulating in food chains. For that reason, there has been intense work in the last decades on developing compounds that do not exhibit such adverse properties.

The use of phosphor in the form of chemical compounds or elementarily as red phosphor turned out to be particularly appropriate. The principle of such flame retardant is based on the formation of phosphor oxides, i.e. removal of oxygen at the seat of fire and formation of a phosphoric carbon layer that shields the material from oxygen.

A very similar way is the use of metal hydroxides and carbonates, respectively. The principle of fire protection here is based on dissociating water or carbon dioxide and forming a metal oxide layer. Magnesium, aluminum and zirconium compounds have turned out to be particularly appropriate. The use of all those methods is especially successful in case of compact plastic parts. A disadvantage particularly of the last two methods is the typically large amounts of material to be used, so that the properties of the plastic are strongly affected.

According to ZWEIFEL, H. Plastic Additives Handbook, 5th Edition, Publishers Carl Hanser, München 2001, 12.4, page 688, as flame retardants for thermosetting plastics, particularly epoxides, unsaturated polyester and polyurethanes, two different types of compounds are used, i.e. those, on the one hand, that chemically react with a resin precursor, and, on the other hand, those purely based on an additive which are not part of a polymerization reaction of the resin precursor.

In contrast to the plastics processing industry and the manufacture of plastics for the production of articles made of plastics, a mineral insulator, however, comprises some particular features that render the use of all those otherwise very successful methods more difficult or totally ineffective. Thus, it should be kept in mind that the binder plastic is extremely dispersed in the material. Thus, the surface is very large while the thickness of the layer is small, which makes a removal of oxygen from the material more or less impossible and at the same time prevents the formation of an effective barrier layer as the layers of binder plastic usually are not thicker than approximately 15 micrometer.

In addition, the percentage of plastic used as a binder usually only is between 2 and 10% of the total mass of the insulator, but to a large extent the mechanical properties and in particular the stability of the composite are produced thereby.

Although mineral insulator products with normal glowing losses of about 5% pass the test according to DIN EN ISO 1182 for assessing their reaction to fire without problems and, in reaching the fire classification A1 according to DIN 13501-1, are certainly not inflammable, a few standardized fire scenarios, in particular fire resistance tests, for example, for ventilation ducts according to DIN EN 1366-1, additionally require that a maximum temperature of the far side of the fire be kept. Exceeding such a temperature generally is considered as the maximum time that the material withstands flame impingement; thereby it is insignificant as to whether or not the insulating material still exists.

In case of higher contents of binder, a respective maximum temperature in such fire resistance tests is exceeded within a very short time due to a peak temperature resulting from burning of the binder. Such effect may well be observed in a thermal peak value upon heating the material according to a given fire scenario. Though such a peak temperature may be reduced or even totally prevented by reducing the content of the binder, this may result in considerably impairing the mechanical properties.

If such an adverse effect on the mechanical properties cannot be accepted flame retardants could be used. However, correspondingly large amounts of flame retardant additives are to be used that generally exceed the absorbing capacity of the plastic and thus have an adverse effect on the mechanical properties of the plastic to be finished.

Such an impact on the mechanical properties has a particularly drastic effect in case of small percentages of plastic, such as, for example, in a binder for mineral wool in which an additive may quickly make up 30 to 40 mass % in a binder system.

This likewise is true in case of halogenated compounds or, during curing of the binder system, fully inert phosphorous compounds. Systems that are not incorporated into the plastic have much less impact on the quality thereof, but are released from the material in the course of time via vaporization or elution. In addition to the loss of flame retardant this represents an additional emission source. The use of halogenated compounds generally leads to an increase in the amount of extractable halogen and thus to failure in AGI Q -132 (quality standard set up by Arbeitsgemeinschaft Industriebau (association of industrial construction industry)) and/or DIN EN 13468 defining an admissible amount of 15 mg/kg of halogen for technical insulation.

The use of metals likewise is difficult. If those metals are present as dissolved compounds, their effect merely is based on forming a barrier layer in case of a fire. However, in addition there is an uncontrolled impact on the reactivity of the binder system in the manufacturing process during curing that may assume an extent that the binder already cures during spraying or does no longer cross-link during the flow of hot gas. The counter-ions moreover cause the wet strength of the plastic or compound system to clearly decrease. In case insoluble compounds such as carbonates or hydroxides are used the result will be that such compounds are decomposed in the polymer melt thus leading to a strong impact on the properties of the plastic. The formation of salts produces systems that, although very hard, do not exhibit any wet strength.

For this reason the provision of binder systems for mineral insulators was limited to merely a few special uses without particular demands to mechanical strength and aging resistance, respectively, as in principle, a compromise of low glowing losses or high concentrations of additives had to be made.

Although fire protection additives are very well known that, up to a specific percentage, are incorporated into plastics by reaction, those compounds exist freely after reaching their receiving capacity in case excesses had to be used. The binder plastic thereby typically undergoes softening, or compounds can be shown by way of extraction with solvents. Moreover, it is to be observed that fire protection additives have a defined breakdown, i.e. the curing temperatures are limited.

A binder for mineral wool is described in WO2007/060236.

Based on the prior art described at the beginning, it is therefore an object of the present invention to provide a binder for binding mineral wool that safeguards effective fire protection behavior of insulator products on mineral wool basis bound with a binder, which is compatible with corresponding standards, while at the same time maintaining the mechanical properties of the insulator product.

With regard to the composition and binder the object is solved by the characterizing features of claims 1 and 10.

As for its use, the above-indicated object is solved by the subject matters of claims 8 and 9.

The object is also solved by a mineral wool product in accordance with claim 11.

For the purpose of the present invention, by the term "resin composition" an aqueous precursor mixture essentially is to be comprehended that may include reactive monomers, oligomers and polymers which under influence of heat in an atmospheric surrounding react with the actual resin, i.e. a higher polymerized final product that in general is solid. In contrast to an unbound mineral wool product of the same type, the polymerized final product, for example, imparts its mechanical properties to a mineral wool product bound therewith.

By the term "mineral wool" in the present invention a solidified accumulation of fibers drawn to fibers from a mineral melt is comprehended, which is to include all types of artificial mineral wool.

Thus, the term "mineral wool" in particular also includes rock wool, basalt wool, slag wool and glass wool.

The problems explained at the beginning may basically be solved if the additive according to the present invention becomes part of the binder system via cross-linking reactions, or is the binder itself. According to the invention, a thermosetting aqueous resin composition has proved to be particularly advantageous, the resin composition including:
a) at least one thermosetting polymer carboxylic acid selected from the group consisting of polyacrylic acids having a molecular mass of 5,000 to 250,000 D; as well as maleic acid-acrylic acid-copolymers having a molecular mass of 5,000 to 250,000 D;
b) at least one organic amine base, the amine base being selected from the group consisting of: alkanolamines, especially ethanolamine; linear or branched C2-C20 alkyl diamines; as well as an amine compound expressed by the general formula (I) of: 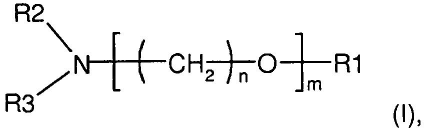 wherein:
   n has a value of 2 - 10 and m has a value of 1 - 50;
   R1 is equal to H, or R1 corresponds to the general formula (II) of: 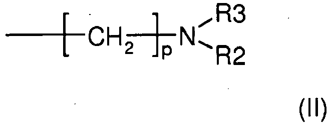
   wherein a value of p is 1 - 10;
   R2 and R3 are equal to H independent of one another, or correspond to general formula III: 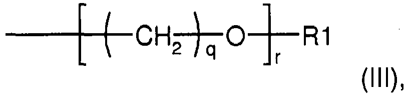
   wherein q may assume a value of 2 - 10 and r may assume a value of 1 - 50; and
   the molecular mass of the amine compound does not exceed an approximate value of 20 000 D;
c) at least one phosphorous compound that may be cross-linked with the polymeric carboxylic acid by an ester or an amide bond, according to the general formula IV: 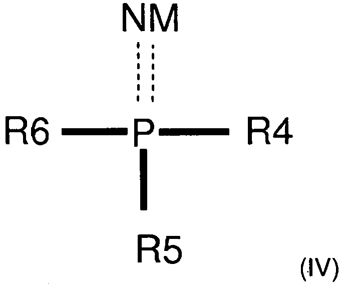
   wherein NM, if provided, is O or S;
   R4 corresponds to the general formula of V, VI, VII or VIII: 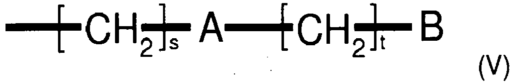 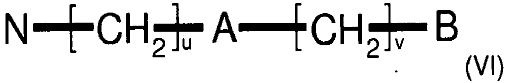 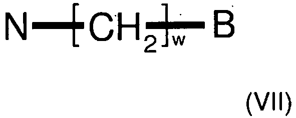 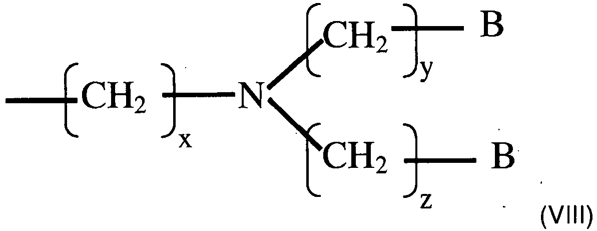
      - A=OorNH;
      - wherein s, t, u, v, w, x, y and z are 1 to 8 independent of one another;
      - B = OH, NH₂ or NHR7 or NR7₂,
      - R5, R6 are C₁-C₈-alkoxy, C₁-C₈-alkyl, phenyl, oxyphenyl, OH, NH₂, H or R4 independent of one another;
      - R7 = C₁-C₈-akyl, or C₁-C₈-hydroxy alkyl;
d) wherein the sum of amine base and phosphorous compound based on 100 parts per mass of polymeric carboxylic acid lies within the range of 30 - 100 parts per mass and wherein the mass ratio of amine base and phosphorous compound is within a range of 3:1 to 1 :3;
   and
e) at least between 0.5 and 20 parts per mass based on the polymeric carboxylic acid of a metal salt selected from the group consisting of: aluminum, magnesium and zirconium salts, in particular aluminum, magnesium and zirconium carbonates, Zr(CO₃)₂, ZrOCO₃, alkaline zirconium carbonate, (NH₄)₂CO₃* Zr(CO₃)₂; as well as mixtures thereof.

Such a thermosetting aqueous resin composition is suited as binder for mineral wool, it constituting, on the one hand, an excellent flame retardant while, on the other hand, not having an essential impact on the mechanical properties of the mineral wool product produced therewith.

The resin composition according to the invention, however, also is suited as flame protection additive for so-called conventional binders based on phenol formaldehyde and phenol formaldehyde urea.

A preferred resin composition has a pH value between 6.5 and 9.5, preferably between 7.0 and 8.5, and a particularly preferred value of about 7.0.

Moreover, it is preferred that the resin composition include a sum of amine base and phosphorous compound, based on 100 parts per mass of polymeric carboxylic acid, within a range of 40 - 90 parts per mass, 50 - 85 parts per mass, and preferably 70 - 85 parts per mass.

The preferred embodiment of the present invention is a resin composition in which the mass ratio of amine base and phosphorus compound is within the range of about 2:1 to about 1:2.

As a preferred resin composition one is used wherein hexamethylenediamine (CAS registry no. 124-09-4) is utilized as amine base and diethyl bis(hydroxyethyl)aminomethylphosphonate (CAS registry no. 2781-11-5) is utilized as phosphorous compound. Both substances are excellently suited for obtaining the desired flame-retarding effect and virtually do not show any influence on the mechanical properties. Moreover, they are readily available commercially and inexpensive.

Moreover, it may be preferred, within the scope of a further embodiment of the resin composition in accordance with the invention, to add at least one additional monomer carboxylic acid. Lower organic alkane carboxylic acids, particularly acetic acid, as well as hydroxyacetic acid, acrylic acid, cinnamic acid, mandelic acid or adipic acid, are particularly suited. Adding carboxylic acid, without being bound thereto, has the advantage that the formation of cross-links of the metal salts used, e.g. zirconium salts, with the other components of the resin composition is catalyzed thereby via a decomposition of primary carbonates, and that the respective metal is stabilized temporarily in the solution via the formation of double salts.

Without being bound to the mechanism discussed in the following, the following reflections may possibly hold: as particularly advantageous, it has turned out experimentally that a particularly suited resin composition in accordance with the present invention includes a carbonate of zirconium, aluminum or magnesium and small amounts of an organic acid. Properly speaking, it is a question of double salts of the corresponding metals, the metal presumably effecting that corresponding bonds for further condensation reactions of the resin system are activated.

It is of particular advantage that the resin compositions of the present invention can be mixed with binders typically used for binding glass fibers and mineral fibers that include phenol formaldehyde binders and phenol formaldehyde urea binders. By this, it is possible that conventional binders may be used in an existing product line without renouncing the chemistry of the binders while at the same time improving their fire protection behavior.

Moreover, the resin composition according to the present invention may also be used as an additive to a binder for mineral wool or glass fibers; in addition to more recent binders free from formaldehyde, e.g. so-called green binders based on renewable raw materials, such a binder may also be a conventional phenol formaldehyde binder system.

The mixing ratio of the binder and the composition according to the present invention in principle is not subject to any limits and may cover the entire range of possible mixing ratios, i.e. 100:0 per cent to 0:100 per cent. The specific mixing ratio depends on the demands for fire protection behavior and mechanical properties. What is preferred is a mixing ratio of binder and composition according to the invention smaller than 1:1, especially preferred is a mixing ratio smaller than 1:2, and most preferred is a mixing ratio smaller than 1:3.

A particular advantage of the thermosetting aqueous resin composition according to the invention is based on the fact that it may be used directly, i.e. without further additives, as a binder for manufacturing mineral wool or glass wool, since it is equipped with polymer components that ensure the bonding of fibers extended from melts, according to processes well known to a skilled person, at overlapping cross-points of the fibers after curing.

The present invention also relates to a binder for mineral or glass wool. Such a binder includes the thermosetting aqueous resin composition according to the present invention, or the resin composition itself may be used as a binder.

Finally, the present invention also relates to a mineral wool product that is bound with a binder according to the present invention.

Such mineral wool products exhibit excellent mechanical properties while being highly resistant to fire at the same time.

Of course, it is well known to a skilled person that a binder for mineral wool may include, based on the desired intended use, further additives that are common in the prior art. Such additives may be, for example: substituted silanes such as, for example, aryl or alkyl silanes, aminoalkylsilanes, aminoalkoxysilanes, e.g. 3-aminopropyltriethoxysilane, carbonyl compounds such as e.g. dihydroxyacetone, hydrophobing agents, dust binding agents, e.g. based on mineral oil or silicone oil, needling aids, etc.

In this context, the present invention as claimed in the claims thus also discloses for instance compositions in accordance with the invention that include at least one or several of the above-indicated additives. Same holds true for binders in accordance with the invention, applications and a mineral wool product bound with the composition.

Further advantages and features of the present invention are to be seen from the description of the examples.

### Examples

On account of the generally applicable principle the examples indicated here constitute only a small portion of possible applicable compounds and are to be regarded as demonstration principle, but not as a restriction. Thus, phosphate 1 easily accessible from diglycol and phosphorous oxychloride is representative of very similar additives with excellent efficacy as known, for example, under trade name OP550 of Clariant or PLF140 of Thor. Phosphonate 2 e.g. is known by the trade name PLF280 of Thor. In contrast to other compounds, it does not have any corresponding substituents. It is thus incorporated into plastic merely via a solution and is to demonstrate as an example that in case of such compound classes the receiving capacity of the plastic matrix is to be observed.

If not indicated otherwise, all % indications relate to mass %.

The present invention makes use of the following abbreviations:
B: Fire protection additive
BM: Binder
M: Metal salt
P: Phosphorous compound
PF: Phenol formaldehyde

**Table 1 Phosphorus compounds used**

| Number | Structure |
|---|---|
| P1 | 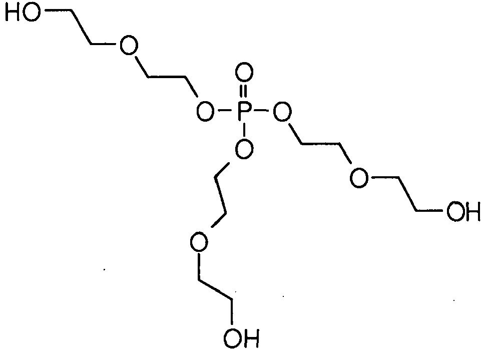 |
| | (C12H27PO10 458,306 g/mol) |
| P2 | 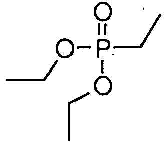 |
| | (C6H15PO3 166,157 g/mol) |
| P3 | 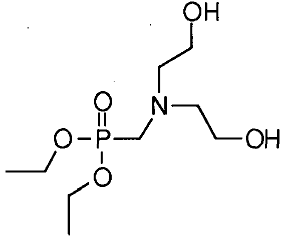 |
| | (C9H22NPO5 255,251 g/mol) |

**Table 2: PF-Binders used**

| Number | Composition |
|---|---|
| BM1 | 146kg of sodium-catalyzed PF - resin with 40% of urea (solid content of 46%), 0.36kg of 3-aminopropyltriethoxysilane, 0.34kg of 70% hydroxyacetic acid, 2kq of ethanolamine (5%) |
| BM2 | 128kg of sodium-catalyzed PF - resin resorcinol modified 51% of solid content, 0.73kg of 3-aminopropyltriethoxysilane, 0.27kg of dihydroxyacetone, 0.28kg of 70% of hydroxyacetic acid, 1.3kg of ethanolamine (98,5%) |

**Table 3: Metal salts used**

| Number | Salt |
|---|---|
| M1 | Zirconium carbonate |
| M2 | Aluminum carbonate alkaline hydrate |
| M3 | Magnesium hydrogen carbonate |

### Examination for incorporation reaction in the plastic matrix

For the test binder 1 with phosphorous compound 1, phosphorous compound 2 and a fire protection additive 1 based on phosphorous compound 3 (Composition: 27kg of phosphorous compound 3, 0.72kg of hydroxyacetic acid, 1.74kg of metal salt 1), by adding 40% of an additive to obtain 100% of binder 1, was cured for 2h at 150°C. The plastic thus obtained was powdered and one gram each was immersed in 10g of water at 50°C, or in 10g of 2-propanol at 40°C for 18h, respectively.

**Table 4:**

| Utilized amounts of binder 1 (solid content of 55%) with corresponding additive as 100% substance (free from water) | | | | | |
|---|---|---|---|---|---|
| Mixture | Mass of binder 1 in g | Mass of additive in g | Amount of substance of additive in mmol | Target content of phosphorus per sample in mg | Concentration of phosphorus in mol/kg |
| BM1 + P1 | 50 | 11 | 24.0 | 743.4 | 0.62 |
| BM1 + P2 | 50 | 11 | 66.2 | 2050.5 | 1.72 |
| BM1 + B1 | 50 | 11 | 32.7 | 1217.3 | 1.02 |

**Table 5: Concentration of phosphorus after immersion in water during the aqueous phase**

| Mixture | Concentration of phosphorus* in mg/kg of solvent | Alteration with regard to initial content in the plastic % |
|---|---|---|
| BM1 + P1 | 1632.3 | 85 |
| BM1 + P2 | n.n. | - |
| BM1 + B1 | n.n. | - |

| | | |
|---|---|---|
| * Determination as phosphate and conversion to elementary phosphorus | | |

**Table 6: Concentration of the corresponding phosphorous compound in 2-propanol Determination via GC-MS**

| Mixture | Concentration of phosphorous compound in mg/kg of solvent | Alteration with regard to initial content in the plastic % |
|---|---|---|
| BM1 + P1* | n.n. | - |
| BM1 + P2 | 25704 | 90 |
| BM1 + B1 | 343 | 2 |

| | | |
|---|---|---|
| *Evidence of aqueous extract not suited for GC | | |

As is proved by the measurements indicated as an example, substances without suitable substitution pattern are bound in the plastic to only a very low degree.

### Processing examples/comparative examples

The PF binders shown in table 2 were diluted with water to a total solid of 17%.

**Table 7: PF binders**

| Binder | Composition for binder with a solid content of 17% |
|---|---|
| BM1* | BM1; 250 kg of water |
| BM2* | BM2; 269kg of water |

The corresponding PF binders are mixed at a solid ratio of 71 (binder) : 29 (fire protection additive), i.e. 27.2 kg of the corresponding fire protection additive per 400kg of binder.

**Table 8:**

| Composition of the fire protection additives related to 400kg of binder with a solid content of 17% | |
|---|---|
| Fire protection additive | Composition |
| B2 | 25kg of phosphorous compound 3; 0.7kg of hydroxyacetic acid (70%), 1.6kg of metal salt 1 |
| B3 | 24.4kg of phosphorous compound 3; 1.1 kg of hydroxyacetic acid (70%), 1.7kg of metal salt 2 |
| B4 | 24.7kg of phosphorous compound 3; 1.1 kg of hydroxyacetic acid (70%), 1.5kg of metal salt 3 |
| B5 | 25.5kg of phosphorous compound 3; 0.55kg of hydroxyacetic acid (70%), 1.1kg of metal salt 1 |

In the binder compositions of non-phenol formaldehyde binders shown in table 9, in the respective resin, 40 mol per cent of hexamethylendiamine are substituted for the corresponding additive.

**Table 9: Non- PF binders**

| Binder | Composition |
|---|---|
| BM3 | 1,000kg of polyacrylic acid (mol weight of 10,000 g/mol 50%), 565.7kg of hexamethylendiamine (70%), 10.1 kg of adipic acid, 5kg of 3-aminotriethoxysilane, 3.4kg of dihydroxyacetone |
| BM4 | 1,000kg of polyacrylic acid (mol weight of 10,000 g/mol 50%), 565.7kg of hexamethylendiamine (70%), 10.1 kg of adipic acid, 5kg of 3-aminotriethoxysilane, 3.4kg of dihydroxyacetone, 15kg of metal salt 1 |
| BM5 | 1,000kg of polyacrylic acid (mol weight of 10,000 g/mol 50%), 339kg of hexamethylendiamine (70%), 8.3kg of adipic acid, 5kg of 3-aminotriethoxysilane, 2.8kg of dihydroxyacetone, 15kg of metal salt 1, 293kg of phosphorous compound 3 |
| BM6 | 1,000kg of polyacrylic acid (mol weight of 10,000 g/mol 50%), 339kg of hexamethylendiamine (70%), 8.3kg of adipic acid, 5kg of 3-aminotriethoxysilane, 2.8kg of dihydroxyacetone, 12.6kg of metal salt 1, 293kg of phosphorous compound 3 |
| BM7 | 1,000kg of polyacrylic acid (mol weight of 10,000 g/mol 50%), 339kg of hexamethylendiamine (70%), 8.3kg of adipic acid, 5kg of 3-aminotriethoxysilane, 2.8kg dihydroxyacetone, 10.1 kg of metal salt 3, 293kg of phosphorous compound 3 |

In each case material was produced with a volumetric weight of 60kg/m³, a strength of 60 mm, and a glowing loss of 2% without the corresponding additives.

**Table 10: Reaction to fire in fire resistance test A60 according to DIN 4102/8 and compressive stress at 10% of strain prior to and after autoclave according to EN 826**

| | Binder | Additive | Time min | Compressive stress kPa prior to autoclave | Compressive stress kPa after autoclave |
|---|---|---|---|---|---|
| Comp. Ex. | BM1* | - | 20 | 4.7 | 2.4 |
| Comp. Ex. | BM1* | Phosphorous compound 1 | 70 | 4.4 | 0.4 |
| Comp. Ex. | BM1* | Phosphorous compound 2 | 73 | 3.9 | 2.8 |
| Comp. Ex. | BM1* | Fire protection additive 2 | 70 | 5.3 | 4.0 |
| Comp. Ex. | BM1* | Fire protection additive 3 | 68 | 5.1 | 2.8 |
| Comp. Ex. | BM1* | Fire protection additive 4 | 69 | 4.7 | 2.2 |
| Comp. Ex. | BM1* | Fire protection additive 5 | 63 | 4.5 | 2.8 |
| Comp. Ex. | BM2* | - | 22 | 6.0 | 5.0 |
| Comp. Ex. | BM2* | Fire protection additive 2 | 78 | 6.3 | 4.8 |
| Comp. Ex. | BM3 | - | 18 | 3.7 | 2.2 |
| Comp. Ex. | BM4 | - | 32 | 4.5 | 3.8 |
| Embodim. | BM5 | - | 66 | 3.6 | 2.6 |
| Embodim. | BM6 | - | 76 | 3.5 | 1.8 |
| Embodim. | BM7 | - | 72 | 3.7 | 2.0 |

| | | | | | |
|---|---|---|---|---|---|
| BM1* and BM2* with and without additive, BM3 and BM4 are comparative examples (Comp. Ex.), BM 5, 6 and 7 (without additive) are embodiments in accordance with the invention (embodim.). | | | | | |

As can easily be discerned from table 10, high mechanical strength, but only little resistance to fire can be achieved using conventional binders. In case of binders with a large amount of additives the fire resistance value is excellent, which emphasizes efficacy of the compounds used, but reduces aging resistance.

Table 11 summarizes the results of tests for various mixtures of binders including the resin composition according to the present invention, i.e. mixtures in which the resin composition according to the present invention was added as additive to the corresponding binder.

Table 11: Reaction to fire in fire resistance test A60 according to DIN 4102/8 and compressive stress at 10% of strain prior to and after autoclave according to EN 826 for mixtures of binder and resin composition according to the present invention.

| Binder | Resin composition | Mass ratio | Time min | Compressive Stress kPa prior to autoclave | Compressive Stress kPa after autoclave |
|---|---|---|---|---|---|
| BM1* | BM5 | 1:1 | 68 | 4.3 | 3.6 |
| BM1* | BM5 | 2:1 | 59 | 4.4 | 3.3 |
| BM1* | BM5 | 1:2 | 75 | 4.1 | 3.5 |
| BM1* | BM6 | 1:1 | 69 | 4.2 | 3.7 |
| BM1* | BM7 | 1:1 | 70 | 4.3 | 3.3 |
| BM1* | BM7 | 5:1 | 35 | 4.7 | 3.2 |
| BM1* | BM7 | 1:5 | 75 | 4.2 | 2.7 |
| BM2* | BM5 | 1:1 | 67 | 5.9 | 4.9 |
| BM2* | BM6 | 1:1 | 67 | 5.7 | 4.8 |
| BM2* | BM7 | 1:1 | 67 | 5.2 | 4.9 |
| BM3 | BM5 | 1:1 | 68 | 4.2 | 2.8 |
| BM3 | BM5 | 2:1 | 59 | 4.4 | 3.2 |
| BM3 | BM5 | 3:1 | 55 | 4.6 | 3.1 |

Incompatibilities of binder and resin composition were not ascertained.

## Claims

1. Thermosetting aqueous resin composition, including:
a) at least one thermosetting polymer carboxylic acid selected from the group consisting of polyacrylic acids having a molecular mass of 5.000 to 250,000 D; as well as maleic acid-acrylic acid-copolymers having a molecular mass of 5.000 to 250,000 D;
b) at least one organic amine base, the amine base being selected from the group consisting of: alkanolamines, especially ethanolamine; linear or branched C2-C20 alkyl diamines; as well as an amine compound expressed by the general formula (I) of: 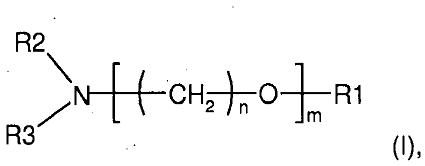 wherein:
n has a value of 2 - 10 and m has a value of 1 - 50;
R1 is equal to H, or R1 corresponds to the general formula (II) of: 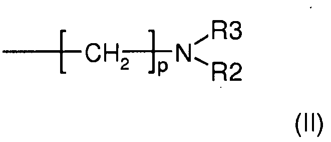
wherein a value of p is 1 - 10;
R2 and R3 are equal to H independent of one another, or correspond to general formula III: 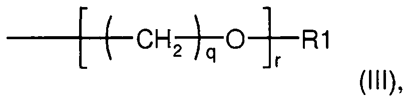
wherein q may assume a value of 2 - 10 and r may assume a value of 1 - 50; and
the molecular mass of the amine compound does not exceed an approximate value of 20 000 D;
c) at least one phosphorous compound that may be cross-linked with the polymeric carboxylic acid by an ester or an amide bond, according to general formula IV: 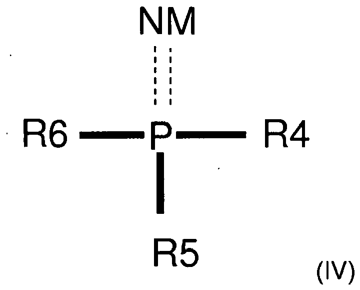
wherein NM, if provided, is O or S;
R4 corresponds to the general formula of V, VI, VII or VIII: 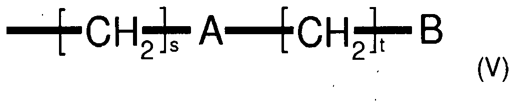 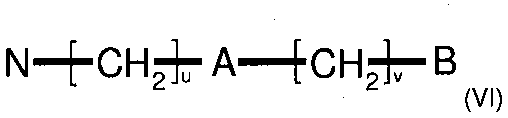 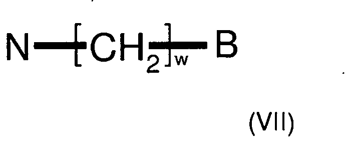 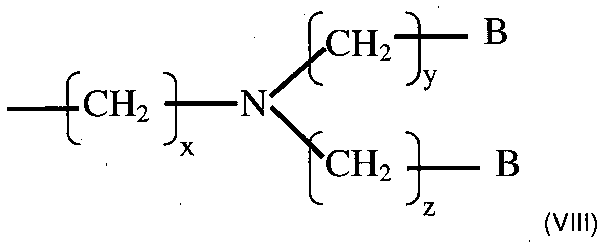
- A=OorNH;
- wherein s, t, u, v, w, x, y and z are 1 to 8 independent of one another;
- B = OH, NH₂ or NHR7 or NR7₂,
- R5, R6 are C₁-C₈-alkoxy, C₁-C₈-alkyl, phenyl, oxyphenyl, OH, NH₂, H or R4;
- R7 = C₁-C₈-alkyl, or C₁-C₈-hydroxy alkyl;
d) wherein the sum of amine base and phosphorous compound based on 100 parts per mass of polymeric carboxylic acid lies within the range of 30 - 100 parts per mass and wherein the mass ratio of amine base and phosphorous compound is within a range of 3:1 to 1:3;
and
e) at least between 0.5 and 20 parts per mass based on polymeric carboxylic acid of a metal salt selected from the group consisting of: aluminum, magnesium and zirconium salts, in particular aluminum, magnesium and zirconium carbonates, Zr(CO₃)₂, ZrOCO₃, alkaline zirconium carbonate, (NH₄)₂CO₃* Zr(CO₃)₂; as well as mixtures thereof.

2. Resin composition according to claim 1, **characterized in that** it has a pH value from 6.5 to 9.5, preferably 7.0 to 8.5, particularly preferably of approximately 7.0.

3. Resin composition according to claim 1 or 2, **characterized in that** the sum of amine base and phosphorous compound, based on 100 parts per mass of polymeric carboxylic acid, is within the range of 40 - 90 parts per mass, 50 - 85 parts per mass, and preferably 70 - 85 parts per mass.

4. Resin composition according to one of the preceding claims, **characterized in that** the mass ratio of amine base and phosphorous compound is within the range of 2:1 to 1:2.

5. Resin composition according to one of the preceding claims, **characterized in that** as amine base hexamethylendiamine (CAS no. 124-09-4) is used and as phosphorous compound diethylbis(2-hydroxyethyl)aminomethylphosphonate (CAS no. 2781-11-5) is used.

6. Resin composition according to one of the preceding claims, **characterized in that** it includes at least one additional monomer carboxylic acid, particularly acetic acid, hydroxyacetic acid, adipic acid, cinnamic acid, mandelic acid or acrylic acid.

7. Resin composition according to one of the preceding claims, **characterized in that** it can be mixed with binders typically used for binding glass fibers and mineral fibers that include phenol formaldehyde binders and phenol formaldehyde urea binders.

8. Use of a resin composition according to one of claims 1 to 7, **characterized in that** it is used as a binder for mineral wool or glass fibers.

9. Use of a resin composition according to one of claims 1 to 7, **characterized in that** it is used as an additive to a binder for mineral wool or glass fibers.

10. Binder for mineral wool and/or glass wool, **characterized in that** it includes a thermosetting aqueous resin composition according to at least one of claims 1 to 7.

11. Mineral wool product, **characterized in that** it is bound with a binder according to claim 10.

## Patentansprüche

1. Wärmehärtbare wässrige Harzzusammensetzung mit:
a) mindestens einer wärmehärtbaren polymeren Carbonsäure ausgewählt aus der Gruppe bestehend aus Polyacrylsäuren mit einer Molekularmasse von 5.000 bis 250.000 D; sowie Maleinsäure-Acrylsäure-Copolymeren mit einer Molekularmasse von 5.000 bis 250.000 D;
b) mindestens einer organischen Aminbase, wobei die Aminbase ausgewählt ist aus der Gruppe bestehend aus: Alkanolaminen, insbesondere Ethanolamin; linearen oder verzweigten C2-C20-Alkyldiaminen; sowie einer durch die folgende allgemeine Formel (I) ausgedrückten Aminverbindung: 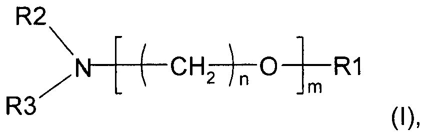 wobei:
n einen Wert von 2 - 10 aufweist und m einen Wert von 1 - 50 aufweist;
R1 gleich H ist oder R1 der folgenden allgemeinen Formel (II) entspricht: 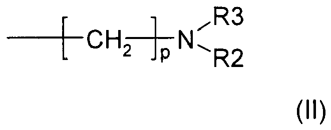
wobei ein Wert von p gleich 1 - 10 ist;
R2 und R3 unabhängig voneinander gleich H sind oder der allgemeinen Formel III entsprechen: 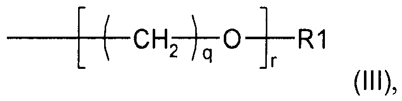
wobei q einen Wert von 2 - 10 annehmen kann und r einen Wert von 1 - 50 annehmen kann; und
die Molekularmasse der Aminverbindung einen ungefähren Wert von 20 000 D nicht übersteigt;
c) mindestens einer Phosphorverbindung gemäß der allgemeinen Formel IV, die über eine Ester- oder Amidbindung mit der polymeren Carbonsäure vernetzt sein kann: 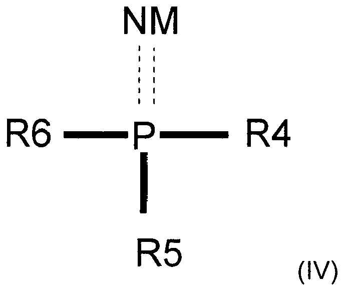
wobei NM, falls vorhanden, gleich O oder S ist;
R4 der allgemeinen Formel V, VI, VII oder VIII entspricht: 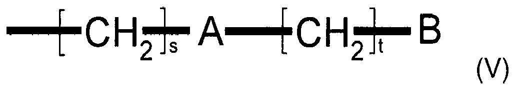 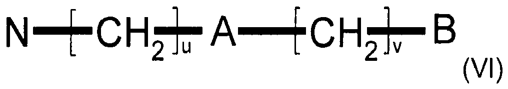 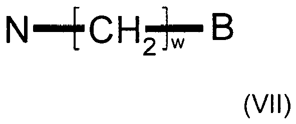 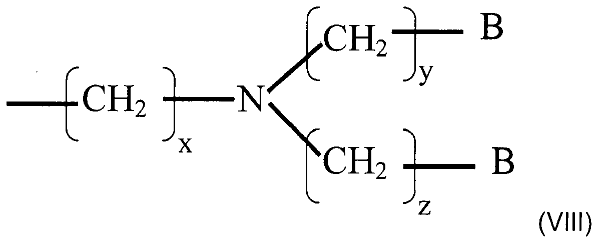
- A = O oder NH;
- wobei s, t, u, v, w, x, y und z unabhängig voneinander 1 bis 8 sind;
- B = OH, NH₂ oder NHR7 oder NR7₂,
- R5, R6 gleich C₁-C₈-Alkoxy, C₁-C₈-Alkyl, Phenyl, Oxyphenyl, OH, NH₂, H oder R4 sind;
- R7 = C₁-C₈-Alkyl oder C₁-C₈-Hydroxyalkyl;
d) wobei die Summe aus Aminbase und Phosphorverbindung bezogen auf 100 Masseteilen der polymeren Carbonsäure innerhalb des Bereichs von 30 - 100 Masseteile liegt und wobei das Massenverhältnis von Aminbase und Phosphorverbindung innerhalb des Bereichs von 3:1 bis 1:3 liegt;
und
e) mindestens zwischen 0,5 und 20 Masseteile bezogen auf die polymere Carbonsäure eines Metallsalzes, das aus der Gruppe ausgewählt ist aus: Aluminum-, Magnesium- und Zirconiumsalzen, insbesondere Aluminum-, Magnesium- und Zirconiumcarbonate, Zr(CO₃)₂, ZrOCO₃, alkalischem Zirkoniumcarbonat, (NH₄)₂CO₃* Zr(CO₃)₂; sowie deren Mischungen.

2. Harzzusammensetzung nach Anspruch 1, **dadurch gekennzeichnet, dass** sie einen pH-Wert von 6,5 bis 9,5, vorzugsweise 7,0 bis 8,5, besonders bevorzugt von ungefähr 7,0 aufweist.

3. Harzzusammensetzung nach Anspruch 1 oder 2, **dadurch gekennzeichnet, dass** die Summe aus Aminbase und Phosphorverbindung, bezogen auf 100 Masseteile an polymerer Carbonsäure, innerhalb des Bereichs von 40 - 90 Masseteile, 50 - 85 Masseteile, und vorzugsweise 70 - 85 Masseteile liegt.

4. Harzzusammensetzung nach einem der vorhergehenden Ansprüche, **dadurch gekennzeichnet, dass** das Massenverhältnis von Aminbase und Phosphorverbindung innerhalb des Bereichs von 2:1 bis 1:2 liegt.

5. Harzzusammensetzung nach einem der vorhergehenden Ansprüche, **dadurch gekennzeichnet, dass** als Aminbase Hexamethylendiamin (CAS Nr. 124-09-4) verwendet wird und als Phosphorverbindung Diethylbis(2-hydroxyethyl)amino-methylphosphonat (CAS Nr. 2781-11-5) verwendet wird.

6. Harzzusammensetzung nach einem der vorhergehenden Ansprüche, **dadurch gekennzeichnet, dass** sie mindestens eine zusätzliche monomere Carbonsäure insbesondere Essigsäure, Hydroxyessigsäure, Adipinsäure, Zimtsäure, Mandelsäure oder Acrylsäure enthält.

7. Harzzusammensetzung nach einem der vorhergehenden Ansprüche, **dadurch gekennzeichnet, dass** sie mit typischerweise zum Binden von Glasfasern und Mineralfasern verwendeten Bindemitteln, welche Phenolformaldehyd-Bindemittel und Phenolformaldehyd-Harnstoff-Bindemittel einschließen, vermischt werden kann.

8. Verwendung einer Harzzusammensetzung gemäß einem der Ansprüche 1 bis 7, **dadurch gekennzeichnet, dass** sie als ein Bindemittel für Mineralwolle oder Glasfasern verwendet wird.

9. Verwendung einer Harzzusammensetzung gemäß einem der Ansprüche 1 bis 7, **dadurch gekennzeichnet, dass** sie als ein Additiv zu einem Bindemittel für Mineralwolle oder Glasfasern verwendet wird.

10. Bindemittel für Mineralwolle und/oder Glaswolle, **dadurch gekennzeichnet, dass** es eine wärmehärtbare wässrige Harzzusammensetzung gemäß wenigstens einem der Ansprüche 1 bis 7 enthält.

11. Mineralwolleprodukt, **dadurch gekennzeichnet, dass** es mit einem Bindemittel gemäß Anspruch 10 gebunden ist.

## Revendications

1. Composition de résine aqueuse thermodurcissable, comprenant :
a) au moins un acide carboxylique polymère thermodurcissable choisi dans le groupe constitué des acides polyacryliques ayant une masse moléculaire de 5 000 à 250 000 D ; ainsi que des copolymères acide maléique - acide acrylique ayant une masse moléculaire de 5 000 à 250 000 D ;
b) au moins une base amine organique, la base amine étant choisie dans le groupe constitué : des alcanolamines, en particulier une éthanolamine ; des alkyle diamines en C₂ à C₂₀ linéaires ou ramifiées ; ainsi que d'un composé amine exprimé par la formule générale (I) de : 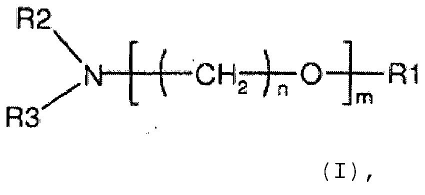 dans laquelle :
n a une valeur de 2 à 10 et m a une valeur de 1 à 50 ;
R1 est H, ou R1 correspond à la formule générale (II) de : 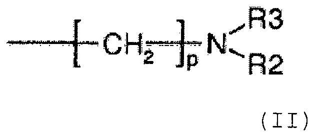
dans laquelle une valeur de p est de 1 à 10 ;
R2 et R3 sont H indépendamment l'un de l'autre, ou correspondent à la formule générale III : 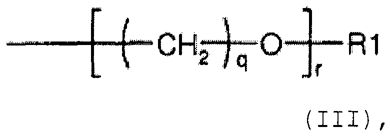
dans laquelle q peut prendre une valeur de 2 à 10 et r peut prendre une valeur de 1 à 50 ; et
la masse moléculaire du composé amine ne dépasse pas une valeur approximative de 20 000 D ;
c) au moins un composé phosphoreux qui peut être réticulé avec l'acide carboxylique polymère par une liaison ester ou une liaison amide, selon la formule générale IV : 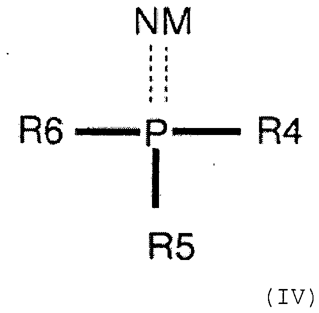
dans laquelle NM, le cas échéant, est O ou S ;
R4 correspond à la formule générale de V, VI, VII ou VIII : 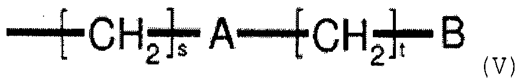 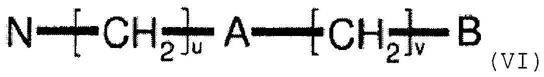 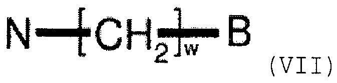 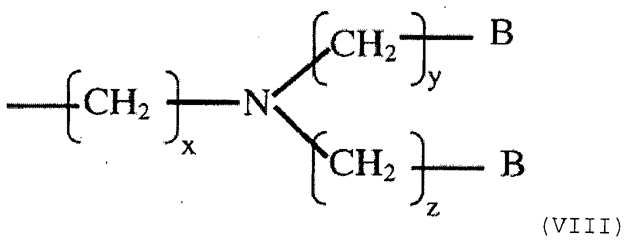
- A = O ou NH ;
- dans lesquelles s, t, u, v, w, x, y et z sont de 1 à 8, indépendamment les uns des autres,
- B = OH, NH₂ ou NHR7 ou NR7₂,
- R5, R6 sont un alcoxy en C₁ à C₈, un alkyle en C₁ à C₈, un phényle, un oxyphényle, OH, NH₂, H ou R4 ;
- R7 = un alkyle en C₁ à C₈, ou un hydroxy alkyle en C₁ à C₈ ;
d) dans laquelle la somme de la base amine et du composé phosphoreux sur la base de 100 parties en masse de l'acide carboxylique polymère se situe dans la plage de 30 à 100 parties en masse et dans laquelle le rapport en masse de la base amine et du composé phosphoreux est dans la plage de 3 : 1 à 1 : 3 ;
et
e) au moins entre 0,5 et 20 parties en masse sur la base de l'acide carboxylique polymère d'un sel métallique choisi dans le groupe constitué : des sels d'aluminium, de magnésium et de zirconium, en particulier des carbonates d'aluminium, de magnésium et de zirconium, de Zr(CO₃)₂, de ZrOCO₃, d'un carbonate de zirconium alcalin, de (NH₄)₂CO₃ * Zr(CO₃)₂ ; ainsi que des mélanges de ceux-ci.

2. Composition de résine selon la revendication 1, **caractérisée en ce qu'**elle présente une valeur de pH allant de 6,5 à 9,5, de préférence de 7,0 à 8,5, de manière particulièrement préférée d'approximativement 7,0.

3. Composition de résine selon la revendication 1 ou 2, **caractérisée en ce que** la somme de la base amine et du composé phosphoreux, sur la base de 100 parties en masse de l'acide carboxylique polymère, est dans la plage de 40 à 90 parties en masse, 50 à 85 parties en masse, et de préférence 70 à 85 parties en masse.

4. Composition de résine selon l'une des revendications précédentes, **caractérisée en ce que** le rapport en masse de la base amine et du composé phosphoreux est situé dans la plage allant de 2 : 1 à 1 : 2.

5. Composition de résine selon l'une des revendications précédentes, **caractérisée en ce que** l'hexaméthylène diamine (CAS no. 124-09-4) est utilisée comme base amine et **en ce que** le diéthylbis(2-hydroxyéthyl)aminométhylphosphonate (CAS no. 2781-11-5) est utilisé comme composé phosphoreux.

6. Composition de résine selon l'une des revendications précédentes, **caractérisée en ce qu'**elle comprend au moins un monomère additionnel acide carboxylique, en particulier acide acétique, acide hydroxyacétique, acide adipique, acide cinnamique, acide mandélique ou acide acrylique.

7. Composition de résine selon l'une des revendications précédentes, **caractérisée en ce qu'**elle peut être mélangée avec des liants utilisés typiquement pour la liaison de fibres de verre et de fibres minérales qui comprennent des liants phénol formaldéhyde et des liants phénol formaldéhyde urée.

8. Utilisation d'une composition de résine selon l'une des revendications 1 à 7, **caractérisée en ce qu'**elle est utilisée comme liant pour de la laine minérale ou des fibres de verre.

9. Utilisation d'une composition de résine selon l'une des revendications 1 à 7, **caractérisée en ce qu'**elle est utilisée comme additif à un liant pour de la laine minérale ou des fibres de verre.

10. Liant pour de la laine minérale et/ou de la laine de verre, **caractérisé en ce qu'**il comprend une composition de résine aqueuse thermodurcissable selon au moins une des revendications 1 à 7.

11. Produit à base de laine minérale, **caractérisé en ce qu'**il est lié à l'aide d'un liant selon la revendication 10.
